# EUROPÄISCHE PATENTSCHRIFT

(11) **EP 3 561 976 B1**
(45) Veröffentlichungstag und Bekanntmachung des Hinweises auf die Patenterteilung: **12.08.2020**
(21) Anmeldenummer: 19167499.3
(22) Anmeldetag: 05.04.2019
(51) Int. Cl.: H02G 3/08, H02G 3/12

(54) **INSTALLATIONSDOSE**
INSTALLATION SOCKET
BOÎTE D'INSTALLATION

(30) Priorität: 27.04.2018 DE 202018102368 U
(43) Veröffentlichungstag der Anmeldung: 30.10.2019
(73) Patentinhaber: OBO Bettermann Hungary Kft., 2347 Bugyi (HU)
(72) Erfinder: Harms, Heiko, 58708 Menden (DE); Kolert, Sergej, 58119 Hagen (DE); Ludwig, Henrik, 58706 Menden (DE)
(74) Vertreter: Haverkamp, Jens

(56) Entgegenhaltungen:
- DE-B- 1 020 708
- DE-B3-102006 037 700
- DE-C1- 3 843 799

## Beschreibung

Die Erfindung betrifft eine Installationsdose für elektrische/elektronische Installationen i gemäß Anspruch 1.

Installationsdosen werden für den Einbau elektrischer und/oder elektronischer Installationen benötigt. Eingesetzt werden derartige Installationsdosen in eine entsprechend vorbereitete Öffnung in einer Wand. Derartige Installationsdosen sind aus einem elektrisch nicht leitenden Material hergestellt, typischerweise aus Kunststoff. Eine solche Installationsdose umfasst einen Dosenkörper. Dieser Dosenkörper verfügt über eine umlaufende ringzylindrische Wand, durch die in radialer Richtung ein durch den Dosenkörper bereitgestellter Installationshohlraum eingefasst ist. Auf der ihrer Montageöffnung gegenüberliegenden Seite ist der Dosenkörper durch einen Boden verschlossen. Der Übergang von der umlaufenden Mantelfläche in den Boden kann durch einen geneigten Übergangsabschnitt erfolgen. In dem Dosenkörper sind Öffnungen zum Ein- bzw. Herausführen von Leitungen in den Installationshohlraum hinein bzw. aus diesem heraus vorgesehen.

Diese Öffnungen sind vorbereitete Öffnungen und werden bei Bedarf geöffnet. Eine solche Öffnung kann durch einen Weichkunststoffüberzug verschlossen sein, der bei Benutzung durchstochen oder durchstoßen wird. Ebenfalls sind Öffnungen bekannt, die als Öffnungen konzipiert sind, sodass bei einer gewünschten Benutzung einer solchen Öffnung das innerhalb der Öffnung befindliche Material des Dosenkörpers herausgebrochen wird. Die Öffnungsfüllung ist zu diesem Zweck mit Sollbruchstellen mit der übrigen Mantelfläche des Dosenkörpers verbunden. Diese Öffnungen dienen zum Einführen von elektrischen Kabeln ebenso wie zum Einführen von Rohren, typischerweise Wellrohren, in denen elektrische Kabel verlegt werden bzw. geführt sind. Unter dem im Rahmen dieser Ausführungen genutzten Begriff einer solchen Leitung zum Einführen in eine solche Öffnung sind elektrische Kabel ebenso zu verstehen, wie Leerrohre, in die bei der späteren Installation elektrische Kabel geführt sind.

In vielen Fällen ist der durch eine solche genormte Installationsdose zur Verfügung gestellte Installationshohlraum nicht ausreichend, damit die erforderlichen elektrischen/elektronischen Installationen darin untergebracht werden können. Bei solchen Installationen kann es sich beispielsweise um Steckdosen, Schalter oder dergleichen handeln. Ist bei einem Wandeinbau eine Nebeneinanderanordnung von mehreren Steckdosen und/oder mehreren Wandschaltern oder auch einer anderen Installation gewünscht, ist es erforderlich, zumindest zwei oder auch mehrere dieser Installationsdosen miteinander zu verbinden. Der Abstand der Installationsdosen ist ebenfalls genormt, damit eine darauf anzubringende Verblendung an der richtigen Position in Bezug auf die in einer solchen Installationsdose befindliche Installationskomponente angeordnet ist bzw. angeordnet werden kann. Um zwei Installationsdosen miteinander zu verbinden, tragen diese zwei, jeweils eine Öffnung, typischerweise eine Öffnung einfassende Verbindungsstutzen. Diese sind in Bezug auf die Längsachse des Dosenkörpers einander gegenüberliegend angeordnet. Diese Verbindungsstutzen weisen in aller Regel eine tunnelförmige Querschnittsgeometrie auf. Die Querschnittsfläche der beiden einander gegenüberliegenden Verbindungsstutzen ist unterschiedlich, sodass der den kleineren Durchmesser und damit eine kleinere Querschnittsfläche aufweisende Verbindungsstutzen in den im Durchmesser größeren Verbindungsstutzen der anderen Installationsdose eingeschoben werden kann. Der im Durchmesser kleinere Verbindungsstutzen ist gemäß einer vorbekannten Ausgestaltung leicht konisch ausgelegt. Aus diesem Grunde sind die auf diese Weise miteinander in Eingriff gestellten Verbindungsstutzen reibschlüssig miteinander verbunden.

Aus DE 102 53 252 B4 ist eine Installationsdose bekannt, bei der die einander gegenüberliegenden Verbindungsstutzen ebenfalls eine tunnelförmige Querschnittsgeometrie aufweisen. Bei dieser vorbekannten Installationsdose sind die komplementär ausgeführten Verbindungsstutzen zusätzlich mit Rastmitteln ausgestattet, wobei die komplementären Rastmittel von zwei miteinander in Eingriff gestellten Verbindungsstutzen für einen sicheren Verbindungssitz von zwei Installationsdosen sorgen.

Zwar können mit diesen vorbekannten Installationsdosen Einbaueinheiten mit mehreren Installationsdosen zusammengestellt werden, bevor diese wandseitig montiert bzw. eingebaut werden. Als nachteilig wird mitunter jedoch angesehen, dass zum Verbinden von zwei Installationsdosen durch Ineingriffstellen ihrer Verbindungsstutzen miteinander dieses nur in einer orientierten und damit aufgrund ihrer unterschiedlichen Auslegung passenden Anordnung der beiden Installationsdosen zueinander möglich ist. Bei nicht entsprechend orientierter Anordnung können die Verbindungsstutzen nicht miteinander in Eingriff gestellt werden. Aus diesem Grunde werden auch keine Installationsdosen hergestellt, die nur einen einzigen Verbindungsstutzen tragen. Es wäre dann erforderlich, unterschiedliche Installationsdosen herzustellen, die sich bezüglich der Auslegung ihrer Verbindungsstutzen unterscheiden.

Aus EP 3 002 839 A1 ist eine Installationsdose mit den Merkmalen des Oberbegriffs des Anspruchs 1 bekannt. Diese Installationsdose trägt an ihrer äußeren Mantelfläche komplementäre Verriegelungsmittel, die durch den Verbindungsstutzen selbst bereitgestellt sind. Die komplementären Stutzenteile sind an unterschiedlichen Seiten der äußeren Mantelfläche der Installationsdose angeordnet, damit eine erste Dose mit einer zweiten Dose durch Verwendung beliebiger Verbindungsstutzen miteinander verbunden werden kann. Als komplementäre Verriegelungsmittel dienen hinterschnittene Nuten, die der Längserstreckung des Dosenkörpers folgen. Eine Verbindung zweier Installationsdosen erfolgt bei diesem Stand der Technik durch gegenseitiges Ineinanderschieben der komplementären, bei diesem Stand der Technik als hinterschnittene Nuten ausgebildeten Verriegelungsmittel.

Eine weitere Installationsdose, die unabhängig von ihrer Orientierung mit einer zweiten Installationsdose verbunden werden kann, ist aus EP 3 059 816 A1 bekannt. Die aus diesem Stand der Technik bekannte Installationsdose ist vom Prinzip her ähnlich aufgebaut, wie die aus EP 3 002 839 A1 bekannte Installationsdose. Während bei der Installationsdose gemäß EP 3 002 839 A1 die Verriegelungsmittel seitlich bezüglich einer möglichen Dosenöffnung angeordnet sind, befinden sich diese beim Gegenstand der EP 3 059 816 A1 oberhalb einer solchen.

Aus DE 10 2006 037 700 B3 ist eine Installationsdose mit den Merkmalen des Oberbegriffs des Anspruchs 1 bekannt. Diese Installationsdose trägt außenseitig an der Wand des Dosenkörpers zwei unterschiedliche Verbindungsstutzen, die ausgelegt sind, damit einer dieser Verbindungsstutzen mit einem komplementär ausgelegten Verbindungsstutzen einer zweiten Installationsdose in Eingriff gestellt werden kann. Bei dieser vorbekannten Installationsdose dienen das innere Stutzenteil und das äußere Stutzenteil dem Zweck, zwei komplementäre Verbindungsstutzen unterschiedlicher Bauart und unterschiedlichen Durchmesser miteinander verbinden zu können. Der Verbindungsstutzen dieses Standes der Technik weist eine tunnelförmige Querschnittsgeometrie auf, wobei ein- und derselbe Boden beiden Stutzenteilen zugeordnet ist.

DE 38 43 799 C1 offenbart eine Installationsdose, die ebenso wie DE 10 2006 037 700 B3 zwei unterschiedlich ausgeführte Verbindungsstutzen trägt, um zwei miteinander in Eingriff zu stellende Installationsdosen miteinander verbinden zu können.

DE 10 20 708 B offenbart eine aus zwei gleichen Hälften bestehende Installationsdose.

Ausgehend von diesem diskutierten Stand der Technik liegt der Erfindung daher die Aufgabe zugrunde, eine Installationsdose vorzuschlagen, die einen Verbindungsstutzen trägt, an den eine zweite Installationsdose mit einem identischen Verbindungsstutzen anschließbar ist, und bei der der Verbund zweier Installationsdosen verbessert ist.

Gelöst wird diese Aufgabe erfindungsgemäß durch eine Installationsdose mit den Merkmalen des Anspruchs 1.

Diese Installationsdose trägt einen oder mehrere Verbindungsstutzen, die ausgelegt sind, damit an diesen ein identischer Verbindungsstutzen einer anderen Installationsdose angeschlossen werden kann. Damit entfällt bei der Montage von zwei Installationsdosen miteinander die Notwendigkeit einer bestimmungsgemäßen Ausrichtung der beiden Installationsdosen zueinander, um diejenigen Verbindungsstutzen zu identifizieren, die miteinander in Eingriff gestellt werden können. Bei dieser Installationsdose kann diese mit ihrem zumindest einen Verbindungsstutzen an jeden beliebigen Verbindungsstutzen einer weiteren gleichartigen Installationsdose angeschlossen werden. Zudem erlaubt diese Installationsdose auch eine Ausgestaltung, bei der lediglich ein einziger Verbindungsstutzen vorgesehen ist, ohne dass hierfür unterschiedliche Installationsdosen hergestellt werden müssten. Somit können identische Installationsdosen aufgrund dieser Verbindungsstutzen miteinander zur Ausbildung einer Einbaueinheit mit beispielsweise auch nur zwei Installationsdosen zusammengesetzt werden.

Erreicht wird dieses dadurch, dass der zumindest eine Verbindungsstutzen komplementäre Stutzenteile aufweist, so dass die Komplementarität dieses Verbindungsstutzens mit einem zweiten Verbindungsstutzen durch den Verbindungsstutzen selbst bereitgestellt ist. Die komplementären Stutzenteile befinden sich auf jeweils unterschiedlichen Seiten in Bezug auf eine vertikale Ebene, in der die Längsachse des Verbindungsstutzens verläuft, auf unterschiedlichen bzw. gegenüberliegenden Seiten. Bei zwei miteinander zu verbindenden Installationsdosen sind sodann aufgrund der um eine vertikale Achse um 180 Grad gedrehten Verbindungsstutzen die komplementären Stutzenteile der beiden Verbindungsstutzen in einer komplementären Anordnung zueinander, so dass diese miteinander in Eingriff gestellt werden können.

Zudem umfasst ein solcher Verbindungsstutzen einen inneren Stutzenteil und wenigstens einen äußeren Stutzenteil. Das äußere Stutzenteil ist konzentrisch zu dem inneren Stutzenteil angeordnet. Dieses bedeutet, dass bei einer kreisringförmigen oder kreisringsegmentförmigen Auslegung der Stutzenteile das äußere Stutzenteil einen etwas größeren Radius aufweist als das innere Stutzenteil. Dieses bedeutet nicht notwendigerweise, dass das äußere Stutzenteil und das innere Stutzenteil sich an derselben Position befinden oder überlappend angeordnet sein müssen. Das äußere Stutzenteil stellt mit seiner zu dem durch den Verbindungsstutzen eingefassten Stutzenkanal weisenden Seite eine Führungskulisse für die Außenseite des inneren Stutzenteils des Verbindungsstutzens einer zweiten Installationsdose bereit, wenn diese beiden Installationsdosen miteinander durch ihre Verbindungsstutzen verbunden werden. Insofern entspricht der Radius der zum Stutzenkanal weisenden Seite des äußeren Stutzenteils und damit seiner Führungskulisse dem Radius der äußeren Umfangs- bzw. Mantelfläche des inneren Stutzenteils, gegebenenfalls zuzüglich eines gewissen Bewegungsspiels.

Wenn im Rahmen dieser Ausführungen von einer konzentrischen Anordnung des inneren und äußeren Stutzenteils die Rede ist, bezieht sich dieses nicht notwendigerweise nur um Stutzenteile, die kreisringförmig oder kreisringsegmentförmig ausgelegt sind, sondern auch auf solche mit einer anderen Umfangskontur, und somit auch eckige, solange der Mittelpunkt der beiden Stutzenteile derselbe ist und sich der Abstand der Stutzenteile von dem Mittelpunkt voneinander unterscheidet.

Das innere Stutzenteil kann in zwei Stutzensegmente unterteilt sein. Ein erstes inneres Stutzensegment weist eine größere Längserstreckung auf als ein zweites inneres Stutzensegment. Somit ist der Abstand der von der Dose wegweisenden Stirnfläche des ersten inneren Stutzensegmentes von der umlaufenden Wand der Dose größer als der diesbezügliche Abstand der freien Stirnfläche des zweiten inneren Stutzensegmentes. Es versteht sich, dass auch mehr als ein erstes inneres Stutzensegment und auch mehr als ein zweites inneres Stutzensegment vorgesehen sein können. Diese beiden Stutzensegmente sind durch in Umfangsrichtung des Verbindungsstutzens wirkende Anschläge voneinander getrennt, beispielsweise durch entsprechende Absätze. Diese Stirnseitengeometrie des inneren Stutzenteils erlaubt die komplementäre Anlage eines identisch aufgebauten inneren Stutzenteils einer zweiten Installationsdose, wobei sich dann die Stirnfläche des ersten inneren Stutzsegmentes des ersten Verbindungsstutzens benachbart zu der Stirnfläche des zweiten inneren Stutzensegmentes des zweiten Verbindungsstutzens befindet und die Stirnfläche des zweiten inneren Stutzensegmentes des ersten Verbindungsstutzens benachbart zu der Stirnfläche des ersten inneren Stutzensegmentes des zweiten Verbindungsstutzens der zweiten Installationsdose. Die Stirnflächen können spaltlos aneinandergrenzen. Aufgrund der zusammenwirkenden Anschläge können die Stutzensegmente auch in Umfangsrichtung spaltlos oder mit einem geringen Spalt zueinander angeordnet sein. In dieser Stellung können die dann zusammenwirkenden Anschläge der inneren Stutzenteile die Installationsdosen gegenüber einem Verdrehen derselben gegeneinander um die Längsachse der fluchtend miteinander in Eingriff gestellten Verbindungsstutzen sichern. Die Führungskulissen des oder der äußeren Stutzenteile gewährleisten ein bestimmungsgemäßes Zusammenfügen von zwei Verbindungsstutzen. In einer anderen Ausgestaltung ist anstelle des inneren Stutzenteils das äußere Stutzenteil in zwei eine unterschiedliche Längserstreckung aufweisende Stutzensegmente unterteilt.

Zum Ineingriffstellen von zwei Verbindungsstutzen zum Zwecke der Verbindung zweier Installationsdosen sind komplementäre Verbindungsmittel vorgesehen, die beispielsweise als Rastverbindungsmittel ausgelegt sein können. Durchaus möglich ist auch die Auslegung eines solchen Verbindungsstutzens mit Verbindungsmitteln und getrennt von diesen angeordneten Rastmitteln.

Zum Sichern der miteinander in Eingriff gestellten Verbindungsstutzen zwecks Verbindung zweier Installationsdosen ist dem zumindest einen Verbindungsstutzen einer solchen Installationsdose zumindest ein Rastelementpaar eines Rastmittels zugeordnet. Diese sind benachbart zueinander angeordnet, sodass diese beim Verbinden von zwei Verbindungsstutzen mit dem Rastelementpaar des anderen Verbindungsstutzens in Eingriff gestellt werden können. Das zumindest eine Rastmittel umfasst zumindest ein positives Rastelement, beispielsweise einen Rasthaken oder einen Raststeg, sowie zumindest ein negatives Rastelement, bei dem es sich um eine Aufnahme zur Aufnahme des positiven Rastelementes handelt, also beispielsweise eine einen Hinterschnitt für einen Rasthaken bildende Kante oder eine Nut zur Aufnahme eines Raststeges sein kann. Diese beiden Rastelemente eines solchen Rastmittels sind benachbart zueinander angeordnet, und zwar getrennt durch eine vertikale Ebene, die sich durch die Längsachse des Verbindungsstutzens erstreckt.

Auch wenn es grundsätzlich als ausreichend angesehen wird, dass zwei Verbindungsstutzen mit einem Rastmittel miteinander verriegelt werden, ist in einer Weiterbildung vorgesehen, dass zwei, an unterschiedlichen Umfangspositionen des Verbindungsstutzens angeordnete Rastmittel vorgesehen sind. Diese Rastmittel können an dem inneren und äußeren Stutzenteil oder auch außenseitig bezüglich des inneren oder äußeren Stutzenteils und damit von dem eigentlichen Verbindungsstutzen beabstandet angeordnet sein. Bei Vorsehen von zwei, an unterschiedlichen Positionen des Verbindungsstutzens befindlichen Rastmitteln ist die verrastende Verbindung der beiden Installationsdosen über ihre miteinander in Eingriff gestellten Verbindungsstutzen um so stabiler gegenüber Querbelastungen, vor allem wenn diese in Richtung der Längserstreckung der Dosenkörper wirken, je größer der Abstand der Rastmittel voneinander ist.

Die Verbindung von zwei derartigen Verbindungsstutzen, jeweils an eine Installationsdose angeformt, kann je nach Auslegung der Verbindungsstutzen durch eine translatorische Fügebewegung - eine Steckbewegung - oder durch eine Dreh- bzw. Steck-Drehbewegung erfolgen. Im letzteren Fall ist eine Ausgestaltung des Verbindungsstutzens bevorzugt, bei der der Stutzenkanal eine kreisförmige Querschnittsfläche aufweist. Bei Verbindungsstutzen, die durch eine Steckbewegung miteinander verbunden werden, ist eine Auslegung eines solchen Stutzenkanals mit einer kreisförmigen Querschnittsfläche möglich, jedoch sind auch andere Querschnittsgeometrien eines solchen Verbindungsstutzens ohne Weiteres realisierbar. Somit kann eine solche Querschnittgeometrie durchaus auch mehreckig oder tunnelförmig ausgeführt sein.

Bei einer Installationsdose mit zumindest einem Verbindungsstutzen, der für eine Steckverbindung mit dem Verbindungsstutzen einer weiteren Installationsdose ausgelegt ist und der Stutzenkanal eine kreisförmige Querschnittsfläche aufweist, erstreckt sich gemäß einer Ausgestaltung das erste innere Stutzenteil über etwa 180 Grad in Umfangserstreckung, während sich das äußere Stutzenteil nur über etwa 150 bis 165 Grad erstreckt. Das innere Stutzenteil und das äußere Stutzenteil überlappen sich nicht. Der Spalt von 15 bis 30 Grad befindet sich vorzugsweise an einer zusammenhängenden Position. Hierbei handelt es sich sodann um einen Verbindungselementeingriff, in dem ein beispielsweise als Rastmittel ausgelegtes Verbindungsmittel, beispielsweise die ersten Rastmittel angeordnet sind. Bei diesen Rastmitteln handelt es sich gemäß einer Ausgestaltung um einen Rasthaken als positives Rastelement. Der Rasthaken befindet sich in dem Rastelementeingriff. Das zweite, komplementär zu dem Rasthaken vorgesehene Rastelement ist an das in axialer Richtung länger ausgelegte erste innere Stutzensegment angeformt, und zwar in Form einer in radialer Richtung nach außen abragenden Wand, dessen zum Dosenkörper weisende Kante die Verriegelungskante für den Rasthaken des Verbindungsstutzens einer zweiten Installationsdose darstellt. Diese Rastmittel befinden sich im Bereich des unteren Scheitels des Verbindungsstutzens und sind durch die vertikale Ebene, in der sich die Längsachse des Verbindungsstutzens befindet, voneinander getrennt. In einer bevorzugten Ausgestaltung ist vorgesehen, an diesen Rastmitteln bezüglich der Längsachse des Verbindungsstutzens gegenüberliegender Position zweite Rastmittel anzuordnen, und zwar vorzugweise mit nur geringem Abstand in Richtung zum Boden des Dosenkörpers zurückversetzt von einem die Montageöffnung einfassenden Montageflansch. Diese Rastmittel befinden sich gemäß einer Ausgestaltung an dem oberseitigen Abschluss von vertikalen Wänden. Eine erste, sich in vertikaler Richtung erstreckende und an die Außenseite des Dosenkörpers angeformte Wand stellt bei einer solchen Ausgestaltung eine Führungswand dar. Auf dessen in Richtung zur Montageöffnung des Dosenkörpers weisenden Abschlussseite befindet sich ein Rasthaken. Benachbart hierzu ist eine aus zwei parallel zueinander angeordneten vertikalen Wänden bestehende Führungskulisse vorgesehen, deren Wände ebenfalls an die äußere Mantelfläche des Dosenkörpers angeformt sind. Der Abstand zwischen diesen beiden Wänden entspricht der Dicke der Führungswand gegebenenfalls zuzüglich eines gewissen Bewegungsspiels. Diese beiden Wände der Führungskulisse sind oberseitig an ihren von dem Dosenkörper wegweisenden Enden durch einen Raststeg miteinander verbunden, der von dem Rasthaken der Führungswand des Verbindungsstutzens einer zweiten Installationsdose hintergriffen wird. Durch die Ineingriffstellung der Führungswand in die Führungskulisse ist zugleich eine weitere Verdrehsicherung zwischen zwei miteinander verbundenen Installationsdosen herbeigeführt.

Bei einer beispielhaften Auslegung des Verbindungsstutzens, damit an diesen der Verbindungsstutzen einer zweiten Installationsdose durch eine Drehbewegung angeschlossen werden kann, sind zumindest zwei äußere, einander bezüglich des Stutzenkanals gegenüberliegende Stutzenteile vorgesehen. Die äußeren Stutzenteile verfügen jeweils über eine sich in Umfangsrichtung über einen gewissen Winkelbetrag erstreckende Führungskulisse, die zur Stirnseite des Verbindungsstutzens hin offen ist. Bei diesem Ausführungsbeispiel stellt die Führungskulisse das erste Teil eines Verbindungsmittels dar, in das als komplementäres Teil ein Führungsglied eingreift, wenn die Verbindungsstutzen zweier Installationsdosen miteinander verbunden werden. Die Breite der Führungskulisse ist an die Breite des darin einzusetzenden Führungsgliedes angepasst, zuzüglich eines eventuell gewünschten Bewegungsspiels.

Die inneren Stutzensegmente können Teil eines inneren Stutzenringes sein. Unabhängig davon, ob die inneren Stutzensegmente Teil eines solchen Stutzenringes sind oder nicht, entspricht der Radius der äußeren Mantelfläche der inneren Stutzensegmente dem Radius der äußeren Stutzenteil an ihrer Innenseite.

Aufgrund der bei dieser Konzeption vorgesehenen Steck-Drehverbindungsbewegung sind typischerweise auch das oder die Rastmittel ausgelegt, um durch die für die Montage zweier Installationsdosen miteinander auszuführende Drehbewegung miteinander in Eingriff gestellt zu werden. Genutzt werden kann hierzu die Führungskulisse des äußeren Stutzenteils, in die beispielsweise eine nutförmige Rastnut eingebracht ist. Das innere Stutzenteil trägt außenseitig einen komplementären Raststeg, wobei beide Rastelemente symmetrisch zu der vertikalen, in der Längsachse des Verbindungsstutzens verlaufenden Ebene zueinander angeordnet sind.

Zum Erhöhen der Knicksteifigkeit einer Einbaueinheit aus zwei miteinander über ihre Verbindungsstutzen verbundenen Installationsdosen in Richtung der Längsachse der Dosenkörper ist in einer Weiterbildung vorgesehen, dass, angeformt an die äußere Mantelfläche des Dosenkörpers, eine in radialer Richtung zu dem Verbindungsstutzen abragende und sich in vertikaler Richtung erstreckende Stützwand vorgesehen ist. Diese befindet sich in der vertikalen Ebene, in der auch die Längsachse des Verbindungsstutzens angeordnet ist. Die radiale Erstreckung dieser Stützwände ist so bemessen, dass zwei miteinander in Eingriff gestellte Verbindungsstutzen mit den Stirnseiten ihrer Stützwände aneinander anliegen.

Aufgrund der Konzeption des Verbindungsstutzens einer solchen Installationsdose kann diese quasi an beliebiger Position einen solchen Verbindungsstutzen aufweisen. Somit kann eine solche Installationsdose auch zwei oder mehr Verbindungsstutzen aufweisen, ohne dass es erforderlich wäre, an einander diametral gegenüberliegenden Positionen, wie dieses beim Stand der Technik erforderlich ist, von ihrer Geometrie und Auslegung her unterschiedliche Verbindungsstutzen anordnen zu müssen. Daher ist mit dieser Installationsdose auch die Kombinationsmöglichkeit und Gestaltungsfreiheit zum Erstellen von Einbaueinheiten deutlich verbessert.

Nachfolgend ist die Erfindung anhand von Ausführungsbeispielen unter Bezugnahme auf die beigefügten Figuren beschrieben. Es zeigen:
- **Fig. 1:**: Eine perspektivische Ansicht einer Installationsdose gemäß einem ersten Ausführungsbeispiel mit zwei Verbindungsstutzen,
- **Fig. 2:**: eine Draufsicht auf die Installationsdose der Figur 1,
- **Fig. 3:**: eine vergrößerte Darstellung des in Figur 1 vorderen Verbindungsstutzens,
- **Fig. 4:**: eine Stirnseitenansicht eines Verbindungsstutzens der Installationsdose der Figur 1,
- **Fig. 5:**: eine Schnittdarstellung durch die Installationsdose entlang der Linie A - B der Figur 4,
- **Fig. 6:**: zwei Installationsdosen der Figur 1 bei dem Vorgang des Verbindens miteinander,
- **Fig. 7:**: die aus den beiden Installationsdosen der Figur 6 gebildete Einbaueinheit in einer Seitenansicht,
- **Fig. 8:**: die aus den beiden Installationsdosen der Figur 6 gebildete Einbaueinheit in einer Draufsicht,
- **Fig. 9:**: eine perspektivische Ansicht einer Installationsdose gemäß einem weiteren Ausführungsbeispiel mit zwei Verbindungsstutzen,
- **Fig. 10:**: eine Draufsicht auf die Installationsdose der Figur 9,
- **Fig. 11:**: eine vergrößerte Darstellung des in Figur 9 vorderen Verbindungsstutzens,
- **Fig. 12:**: eine Stirnseitenansicht eines Verbindungsstutzens der Installationsdose der Figur 9,
- **Fig. 13:**: zwei Installationsdosen der Figur 9 bei dem Vorgang des Verbindens miteinander,
- **Fig. 14:**: die aus den beiden Installationsdosen der Figur 13 gebildete Einbaueinheit in einer Draufsicht,
- **Fig. 15:**: die aus den beiden Installationsdosen der Figur 13 gebildete Einbaueinheit in einer Seitenansicht,
- **Fig. 16:**: die aus den beiden Installationsdosen gebildete Einbaueinheit gemäß Figuren 14 und 15 in einer perspektivischen Ansicht,
- **Fig. 17:**: eine perspektivische Teildarstellung einer weiteren Installationsdose, grundsätzlich entsprechend derjenigen der Figur 9, jedoch mit einer anderen Auslegung seiner Verbindungsmittel und
- **Fig. 18:**: eine Stirnseitenansicht des Verbindungsstutzens der Installationsdose der Figur 17.

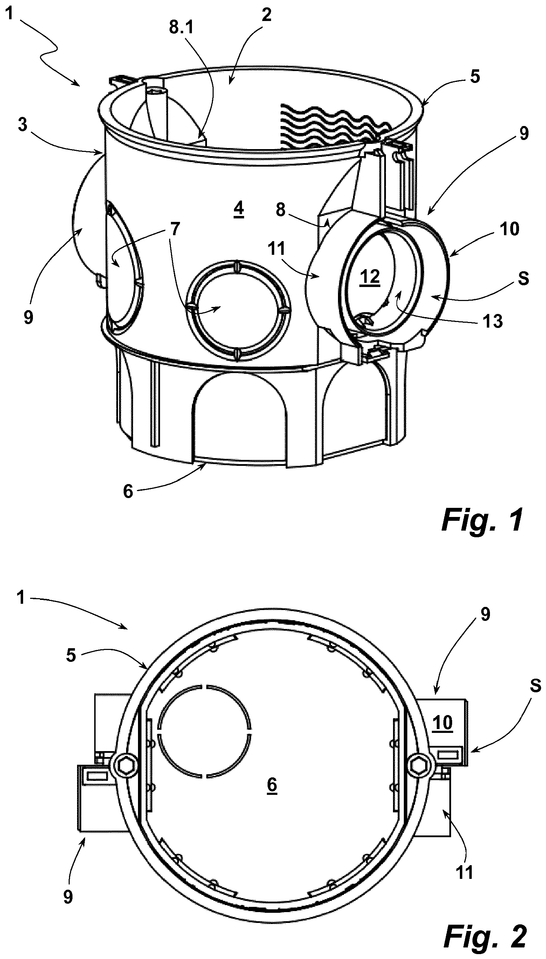

Eine Installationsdose 1 ist zum Einbau in eine entsprechend dimensionierte Wandöffnung vorgesehen und dient zur Aufnahme einer elektrischen und/oder elektronischen Installation, beispielsweise einer Steckdose oder eines Wandschalters. Die Installationsdose 1 ist bei diesem Ausführungsbeispiel ein Kunststoffspritzgussteil. Die Installationsdose 1 umfasst einen ihren Installationshohlraum 2 bereitstellenden Dosenkörper 3. Der Dosenkörper 3 verfügt über eine umlaufende Wand 4 mit etwa ringzylindrischer Mantelfläche, die an ihrem zu der in Figur 1 oberseitigen Montageöffnung weisenden Ende einen in radialer Richtung nach außen abragenden Montageflansch 5 trägt. Der Dosenkörper 3 ist unterseitig durch einen Boden 6 verschlossen. In die Wand 4 sind umfänglich verteilt mehrere als Ausbrechöffnungen ausgeführte Öffnungen 7 angeordnet. Diese dienen zum Ein- bzw. Herausführen von elektrischen Leitungen in den Installationshohlraum 2.

Die umlaufende Wand 4 verfügt bei dem dargestellten Ausführungsbeispiel über zwei einander diametral gegenüberliegende gerade Wandsegmente 8, 8.1, an denen jeweils ein Verbindungsstutzen 9, angeformt ist. Beide Verbindungsstutzen 9 sind identisch aufgebaut.

Der Verbindungsstutzen 9 dient zum Verbinden der Installationsdose 1 mit einem identisch aufgebauten Verbindungsstutzen einer weiteren Installationsdose 1. Der Verbindungsstutzen 9 verfügt über ein inneres Stutzenteil 10 und ein äußeres Stutzenteil 11. Das innere Stutzenteil 10 fasst einen Stutzenkanal S ein. In dem Wandsegment 8 befindet sich eine als Ausbrechöffnung ausgeführte Öffnung 12, die bei dem dargestellten Ausführungsbeispiel ausgelegt ist, um durch den Verbindungsstutzen 9 je nach Anwendungsfall zwei Rohre mit unterschiedlichem Durchmesser einführen zu können. Ist vorgesehen, durch den Verbindungsstutzen 9 ein Rohr mit größerem Durchmessers (hier: 25 mm) einzuführen, wird die gesamte Öffnung 12 entfernt. Dieses beinhaltet auch ein Entfernen des als Teil der Öffnung vorhandenen Adapterstutzen 13. Wird der Verbindungsstutzen 9 hingegen zum Einführen eines Rohrs mit geringerem Durchmesser (hier: 20 mm) benötigt, wird nur der innere Teil der Öffnung 12 herausgebrochen, und zwar ohne dass der Adapterstutzen 13 entfernt wird. Dieser dient dann zur Führung für das Rohr mit kleinerem Durchmesser.

Das innere Stutzenteil 10 ist, wie aus der Draufsicht auf die Installationsdose 1 auf ihre Montageöffnung in Figur 2 gezeigt, in radialer Richtung und somit in Richtung der Längsersteckung des Verbindungsstutzens 9 länger als das äußere Stutzenteil 11.

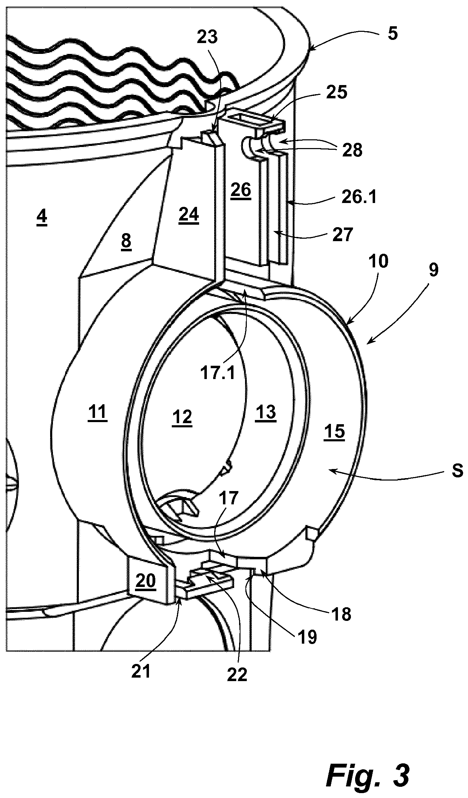

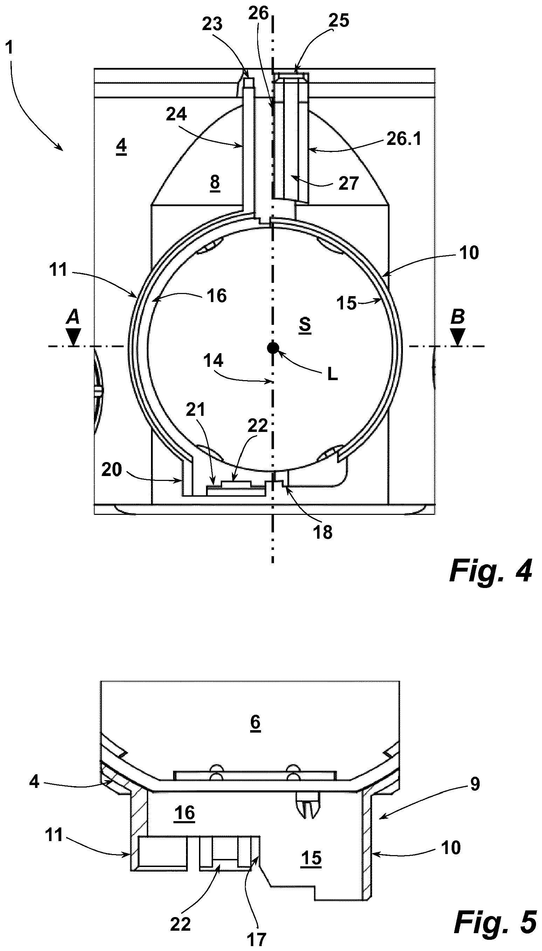

Der Aufbau des Verbindungsstutzens 9 ist detaillierter in der Ausschnittsvergrößerung der Figur 3 erkennbar. Hierin ist auch die vorgeschriebene längere Ausgestaltung des inneren Stutzenteils 10 gegenüber dem äußeren Stutzenteil 11 erkennbar. Das äußere Stutzenteil 11 dient mit seiner zu dem Stutzenkanal weisenden Seite als Führungskulisse für die Außenseite des inneren Stutzenteils 10 eines mit dem Verbindungsstutzen 9 zu verbindenden identischen Verbindungsstutzens einer zweiten Installationsdose 1. Daher entspricht der Radius der Innenseite des äußeren Stutzenteils 11 dem Radius der Außenseite des inneren Stutzenteils 10. Das innere Stutzenteil erstreckt sich, wie aus der Darstellung der Installationsdose der Figur 4 erkennbar, über etwa 180 Grad. Diese 180 Grad erstrecken sich auf der einen Seite einer vertikalen Ebene 14 (siehe Figur 4), in welcher Ebene 14 ebenfalls die Längsachse des Verbindungsstutzens 9 liegt. Das innere Stutzenteil 10 umfasst ein erstes inneres Stutzensegment 15, welches in Richtung der Längserstreckung des Verbindungsstutzens 9 länger ausgeführt ist als ein zweites inneres Stutzensegment 16. Die beiden Stutzensegmente 15, 16 sind bei dem dargestellten Ausführungsbeispiel Teil eines Stutzenringes.

Die beiden inneren Stutzensegmente 15, 16 sind voneinander durch in Umfangsrichtung wirkende Anschläge 17, 17.1 getrennt (siehe Figur 3). Bei dem dargestellten Ausführungsbeispiel verlaufen die Anschläge 17, 17.1 parallel zur Längserstreckung des Verbindungsstutzens 9.

An dem ersten inneren Stutzensegment 15 ist im Bereich seines in Figur 3 erkennbaren unteren Endes in radialer Richtung nach außen abragend eine Kulisse 18 gebildet, durch die eine Verriegelungskante 19 bereitgestellt ist. Bei der Kulisse 18 mit ihrer Verriegelungskante 19 handelt es sich um ein Rastelelement eines Rastelementpaares, welches mit dem komplementären Rastelement an einen Verbindungsstutzen einer zweiten Installationsdose 1 zusammenwirkt.

Das äußere Stutzenteil 11 erstreckt sich bei dem dargestellten Ausführungsbeispiel über etwa 155 Grad, und zwar ergänzend zu der Umfangserstreckung des inneren Stutzenteils 10. Das äußere Stutzenteil 11 endet in einer in vertikaler Richtung nach unten abgewinkelten Wand 20. Zwischen der Wand 20 und dem Anschlag 17 befindet sich ein Rastelementeingriff, in dem ein Bügel 21, angeformt an die Stirnseite des zweiten inneren Stutzensegmentes 16, mit einem Rasthaken 22 angeordnet ist. Der Bügel 21 mit seinem Rasthaken 22 stellt das komplementäre Rastelement dar, welches mit der Kulisse 18 bzw. ihrer Verriegelungskante 19 zusammenwirkt. Die Ausgestaltung des den Rasthaken 22 tragenden Bügels 21 gestattet eine elastische Verformung in vertikaler Richtung, damit der Rasthaken 22 in den Hinterschnitt hinter die Verriegelungskante 19 des Verbindungsstutzens einer zweiten Installationsdose eingebracht werden kann. Bei den vorbeschriebenen Rastmitteln handelt es sich somit um Rastverbindungsmittel, die bei dieser Ausgestaltung die Verbindungsmittel und Rastmittel in sich vereinen.

Neben den vorbeschriebenen, am inneren Stutzenteil 15 befindlichen Rastmitteln 18, 19, 22 verfügt die Installationsdose 1 über zweite Rastmittel. Ein als Rasthaken 23 ausgebildetes erstes Rastelement dieser zweiten Rastmittel befindet sich auf der oberen Schmalseite einer Führungswand 24. Die Führungswand 24 ist an die umlaufende Wand 4 des Dosenkörpers 3 beziehungsweise ihr Wandsegment 8 angeformt und erstreckt sich in vertikaler Richtung. Angeformt ist die Führungswand 24 mit ihrem unteren Ende an den oberen Abschluss des äußeren Stutzenteils 11. Als komplementäres Rastelement dient bei den zweiten Rastmitteln ein Raststeg 25. Der Raststeg 25 verbindet zwei parallel zueinander verlaufende Wände 26, 26.1. Auch die Wände 26, 26.1 erstrecken sich in vertikaler Richtung und sind an die umlaufende Wand 4 beziehungsweise das Wandsegment 8 angeformt. Die Wände 26, 26.1 fassen eine Führungskulisse 27 ein. Die Weite der Führungskulisse 27 entspricht der Dicke der Führungswand 24, sodass die Führungswand 24 des Verbindungsstutzens einer zweiten Installationsdose in die Führungskulisse 27 eingeführt werden kann. Die Wände 26, 26.1 enden in vertikaler Richtung mit Abstand zu der Außenseite in Umfangsrichtung des inneren Stutzenteils 10, damit der äußere Stutzenteil 11 des Verbindungsstutzens einer zweiten Installationsdose 1 darunter greifen kann. Dieses gilt vor allem für die Wand 26.1. Unterhalb des Raststeges 25 befindet sich in den Wänden 26, 26.1, ausgehend von ihrer freien Stirnfläche jeweils eine Ausnehmung 28. Diese dient dem Zweck der Bereitstellung einer gewissen Elastizität des Steges 25 in vertikaler Richtung. Jeweils ein Rastelement der beiden Rastelementpaare befindet sich auf einer Seite der in Figur 4 eingezeichneten vertikalen Ebene 14. Dies gewährleistet, dass zwei identische Verbindungsstutzen 9 zwei Installationsdosen 1 miteinander in Eingriff gestellt werden können.

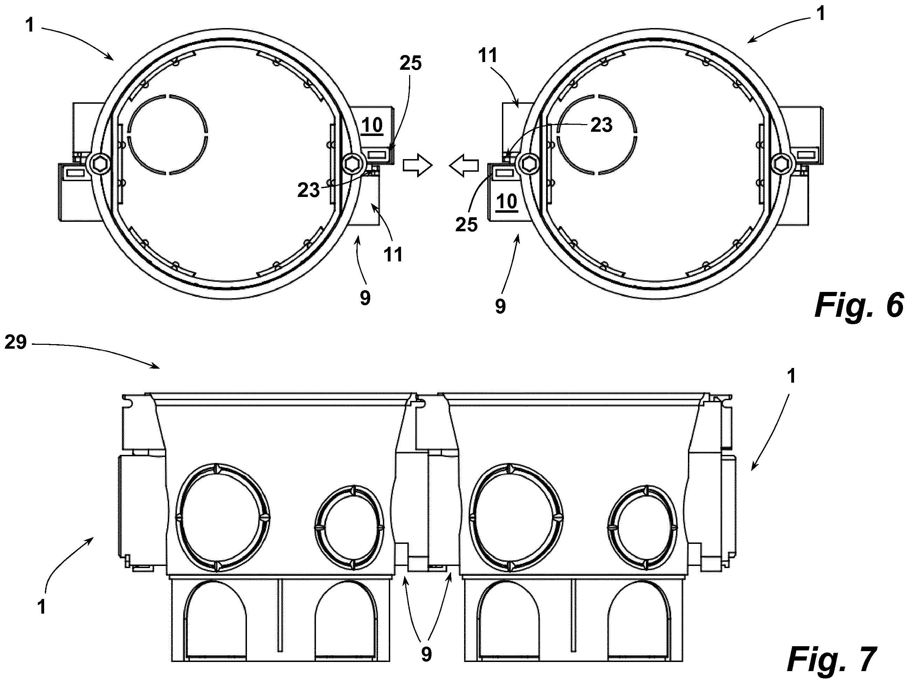

Figur 6 zeigt in einer Draufsicht zwei Installationsdosen 1, die mittels ihrer Verbindungsstutzen 9 miteinander verbunden werden sollen. Zum Zweck einer Verbindung werden beide Installationsdosen 1, wie durch die Doppelpfeile in Figur 6 angedeutet, aufeinander zubewegt, bis die beiden Verbindungsstutzen 9 miteinander in Eingriff gestellt sind. Dabei dienen die Stutzenteile 11 mit ihren Innenseiten als Führungskulisse für die inneren Stutzenteile 10. Bei dem Zusammenführen der beiden Verbindungsstutzen 9 werden die Rastelemente der beiden Rastmittel miteinander in Eingriff gestellt. Dies bedeutet, dass der Rasthaken 23 jedes Verbindungsstutzens 9 zum Zweck der oberseitigen Verriegelung der beiden Installationsdosen 1 miteinander hinter den Raststeg 25 des jeweilig anderen Verbindungsstutzens 9 gebracht wird. In analoger Weise werden auch die Rastelemente der unterseitig angeordneten Rastmittel im Zuge der translatorisch ausgeführten Zusammensteckbewegung miteinander in Eingriff gestellt, und zwar indem die Rasthaken 22 die Verriegelungskante 19 des jeweilig anderen Verbindungsstutzens 9 hintergreifen.

Figur 7 zeigt die beiden miteinander durch ihre Verbindungsstutzen 9 verbundenen Installationsdosen 1 als Einbaueinheit 29 in einer Seitenansicht. Durch den Eingriff der jeweiligen Führungswand 24 in die Führungskulisse 27 des jeweiligen anderen Verbindungsstutzens 9 ist neben der Drehsicherung, die durch die zusammenwirkenden Anschläge 17, 17.1 bereitgestellt ist, eine zusätzliche Drehsicherung bewirkt.

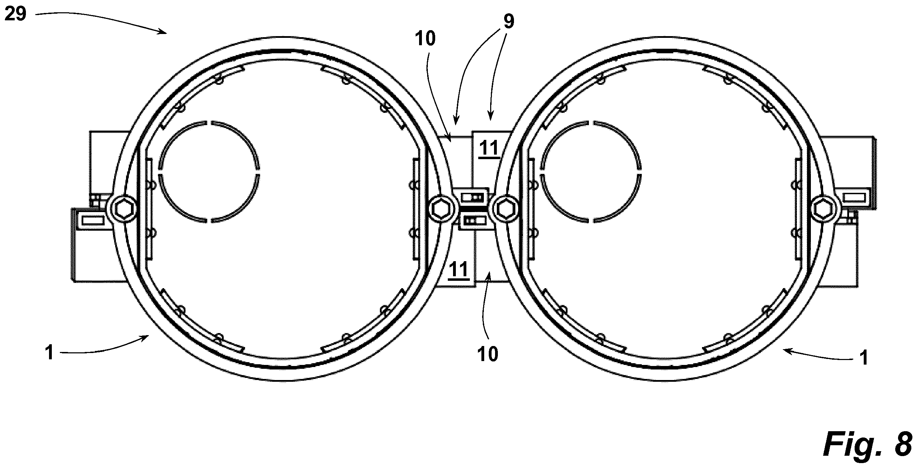

Figur 8 zeigt in einer Draufsicht die aus den beiden Installationsdosen 1 gebildete Einbaueinheit 29. Deutlich erkennbar ist bei den beiden miteinander in Eingriff gestellten Verbindungsstutzen 9, dass das äußere Stutzenteil 11 einen größeren Radius aufweist als das innere Stutzenteil 10, was den in Figur 8 erkennbaren Absatz zwischen den Verbindungsstutzen 9 begründet.

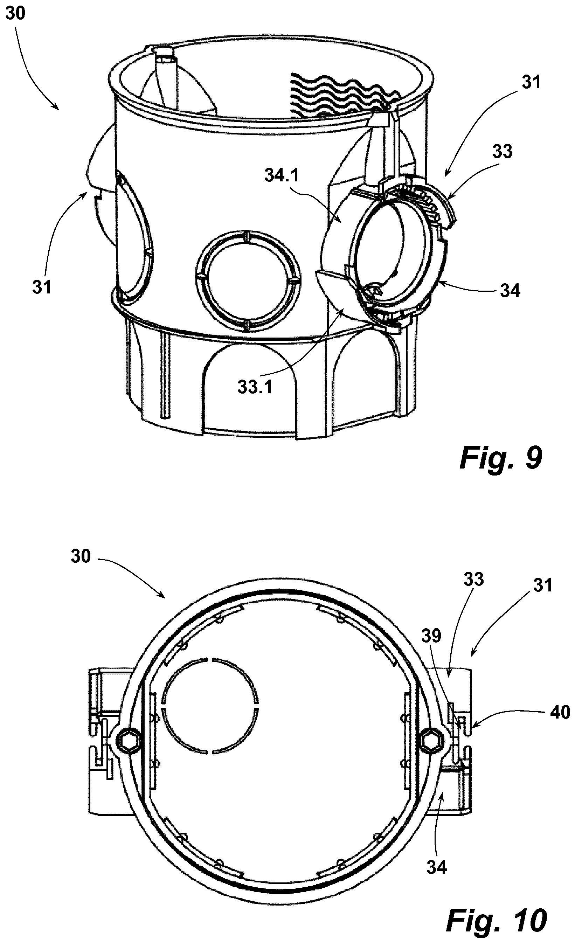

Figuren 9 bis 12 zeigen eine weitere Installationsdose 30, die prinzipiell konzipiert ist wie der in den vorstehenden Figuren beschriebene Dosenkörper 3. Die Installationsdose 30 unterscheidet sich von der Installationsdose 1 durch die Auslegung seiner Verbindungsstutzen 31. Bei der Installationsdose 30 können zwei dieser Installationsdosen 30 über ihre Verbindungsstutzen 31 durch eine um einen bestimmten Drehwinkelbetrag durchgeführte Drehbewegung miteinander verbunden und verriegelt werden. Bei dem dargestellten Ausführungsbeispiel ist eine Drehbewegung von etwa 20 Grad für die Verriegelung der beiden Verbindungsstutzen 31 miteinander erforderlich. Der Verbindungsstutzen 31 umfasst ein inneres Stutzenteil 32 und zwei äußere Stutzenteile 33, 33.1. Die äußeren Stutzenteile 33, 33.1 sind einander diametral bezüglich der Längsachse L des Verbindungsstutzens 31 gegenüberliegend angeordnet. Ebenso wie bei dem Ausführungsbeispiel der Installationsdose 1 dienen die in Richtung zum Stutzenkanal weisenden Innenseiten der äußeren Stutzenteile 33, 33.1 als Führungskulisse für das innere Stutzenteil 32 des Verbindungsstutzens einer zweiten Installationsdose 30, wenn diese miteinander verbunden werden sollen.

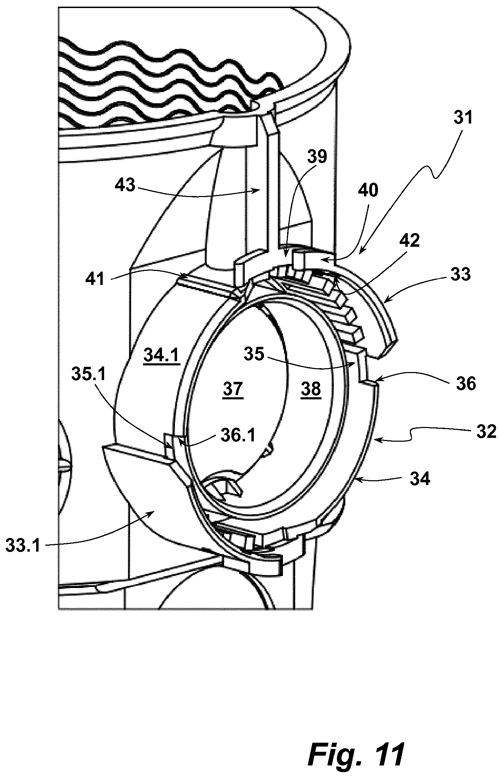

Das innere Stutzenteil 32 ist bei der Installationsdose 30 als Stutzenring ausgeführt und verfügt über zwei, ebenfalls einander diametral gegenüberliegende erste innere Stutzensegmente 34, 34.1, deren von der Dose wegweisende Stirnseiten zu der umlaufenden Wand einen größeren Abstand aufweisen als die zweiten inneren Stutzensegmente 35, 35.1 (siehe auch Figur 11). Die ersten und zweiten inneren Stutzensegmente 34, 34.1, 35, 35.1 sind voneinander durch jeweils einen Anschlag 36, 36.1 getrennt, der in Umfangsrichtung, und zwar in Richtung einer auszuübenden Drehbewegung zum Verbinden zweier Verbindungsstutzen 31 miteinander wirkt.

Auch der Verbindungsstutzen 31 fasst eine als Ausbrechöffnung ausgeführte Öffnung 37 mit einem Adapterstutzen 38 ein.

Die beiden äußeren Stutzenteile 33, 33.1 sind identisch aufgebaut. Nachfolgend ist das äußere Stutzenteil 33 näher beschrieben. Diese Ausführungen gelten gleichermaßen für das gegenüberliegende äußere Stutzenteil 33.1. Das äußere Stutzenteil 33 verfügt über eine Führungskulisse 39 (siehe auch Figur 10) als erstes Verbindungsmittel. Diese Führungskulisse 39 erstreckt sich quer zur Längserstreckung des Verbindungsstutzens 31 und somit in Umfangsrichtung des Verbindungsstutzens 30 und ist in Richtung zur freien Stirnseite offen. Diese Öffnung stellt die Einsetzöffnung für ein komplementäres Führungsglied als zweites Verbindungsmittel dar. Die Öffnung der Führungskulisse 39 befindet sich am Ende derselben entgegen der Drehrichtung zum Verbinden zweier Verbindungsstutzen 31 miteinander. Die Weite der Führungskulisse 39 entspricht zuzüglich eines gewissen Bewegungsspiels der Breite des darin einzusetzenden Führungsgliedes. Bei dem dargestellten Ausführungsbeispiel ist als Führungsglied 40 eine die Führungskulisse 39 in Richtung zum Dosenkörper begrenzende Wand vorgesehen. Diese steht in radialer Richtung von der äußeren Mantelfläche des inneren Stutzenteils 32 ab.

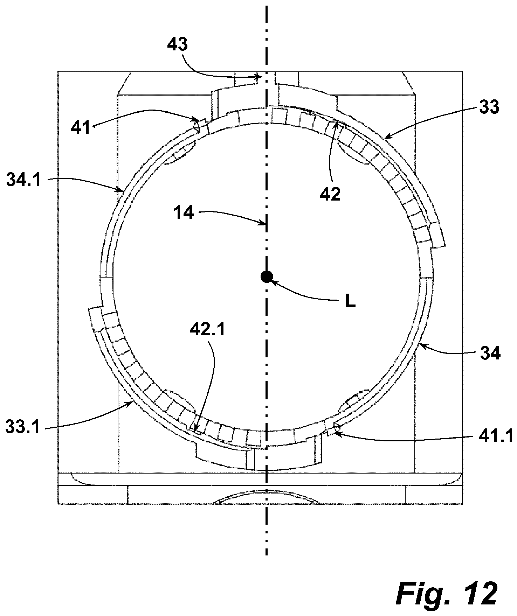

Zum Verriegeln von zwei miteinander in Eingriff gestellten Verbindungsstutzen 31 trägt jedes erste innere Stutzensegment 34, 34.1 außenseitig einen Raststeg 41, 41.1 (siehe Figur 12). Die Raststege 41, 41.1 erstrecken sich parallel zur Längserstreckung des Verbindungsstutzens 31. Als Aufnahme für einen Raststeg 41, 41.1 des Verbindungsstutzens 31 einer zweiten Installationsdose 30 ist in die Innenseite der äußeren Stutzenteile 33 jeweils eine Rastnut 42, 42.1 als Rastvertiefung eingebracht, in die der komplementäre Raststeg 41, 41.1 nach erfolgter Drehbewegung einrastet und die beiden Verbindungsstutzen 31 miteinander verriegelt.

Angeformt an den oberen äußeren Stutzenteil 33 ist mit einer vertikalen Erstreckung eine Stützwand 43, die an der Außenseite des Dosenkörpers beziehungsweise seiner umlaufenden Wand angeformt ist. Diese Stützwand 43 befindet sich in der vertikalen Ebene, in der die Längsachse des Verbindungsstutzens 31 angeordnet ist. Die radiale Erstreckung der Stützwand 43 ist so ausgelegt, dass bei zwei miteinander verbundenen Verbindungsstutzen 31 die Stützwände 43 sich gegenseitig aufeinander abstützen und somit kontaktieren.

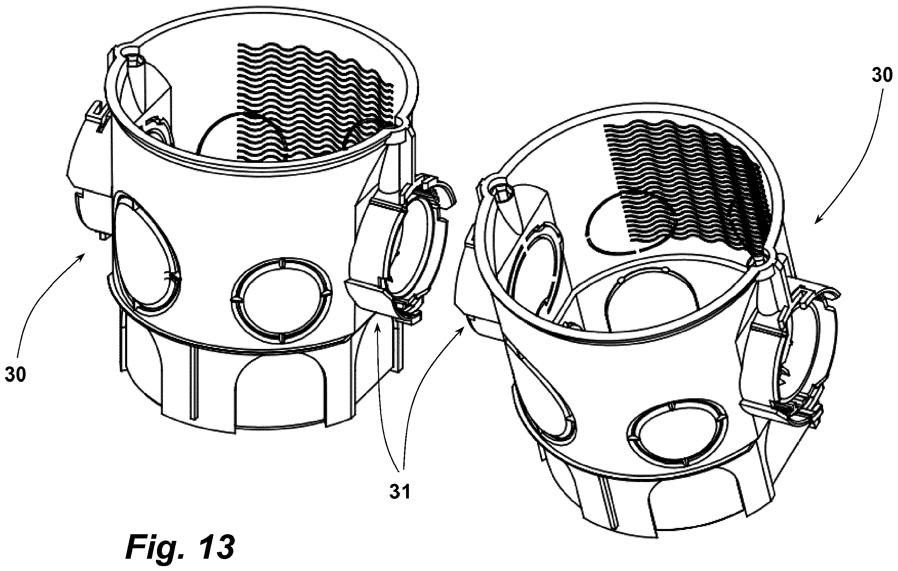

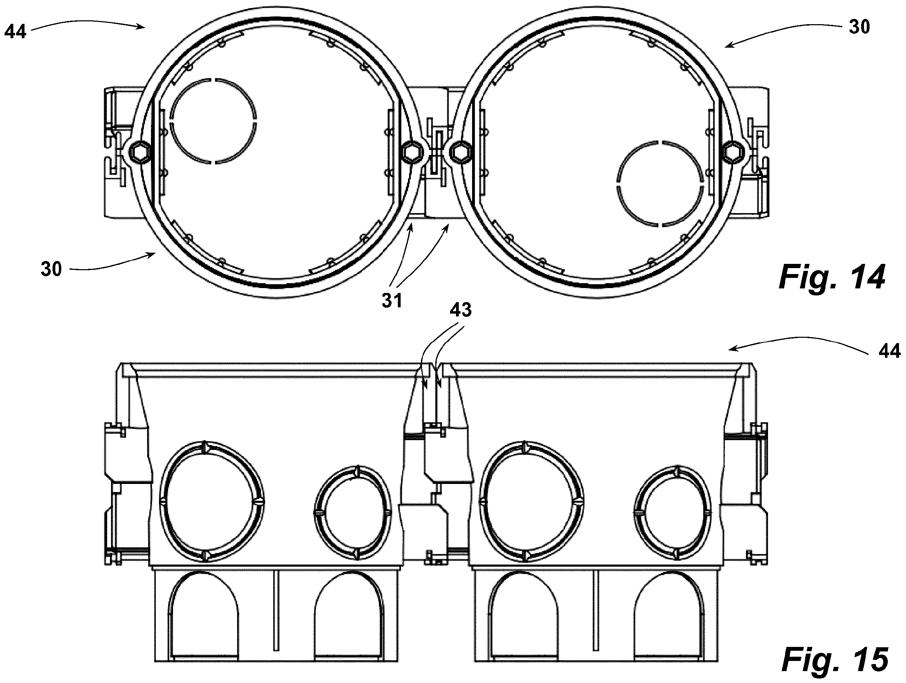

Figur 13 zeigt zwei Installationsdosen 30, die mittels ihrer Verbindungsstutzen 31 miteinander verbunden werden sollen. Die in Figur 13 rechts gezeigte Installationsdose 30 ist zu diesem Zweck um etwa 20 Grad gegenüber der linken Installationsdose gegen den Uhrzeigersinn gedreht, damit die Führungsglieder 40 in die komplementären Führungskulisse 39 eingeführt werden können. Sind diese in die stirnseitige Öffnung der jeweiligen Führungskulisse 39 eingesetzt, wird die in Figur 13 rechts gezeigte Installationsdose 30 um etwa 20 Grad im Uhrzeigersinn gedreht, bis die Öffnungen der beiden Installationsdosen 30 in einer Ebene befindlich sind. Diese zusammengesetzte Stellung der beiden Installationsdosen 30 mit ihren Montageflanschen zur Ausbildung einer Einbaueinheit 44 ist in einer Draufsicht in Figur 14 gezeigt.

In der Seitenansicht der Einbaueinheit 44 ist das gegenseitige Abstützen der Stützwände 43 der beiden Verbindungsstutzen 31 deutlich zu erkennen. Diese Abstützung ermöglicht ein Eindrücken der Einbaueinheit 44 in eine entsprechend vorbereitete Wandöffnung und zwar vor allem auch in eine bereits mit Gips oder einem anderweitigen Mörtel befüllte Wandöffnung, um die Ebenen der Mündungen der Installationsdosen 30 in derselben Ebene zu belassen. Eine solche Abstützung erfolgt auch bei zwei miteinander verbundenen Installationsdosen 1 anhand des Eingriffes der jeweiligen Führungswand 24 in die komplementäre Führungskulisse 27 des Verbindungsstutzens 9 der anderen Installationsdose 1.

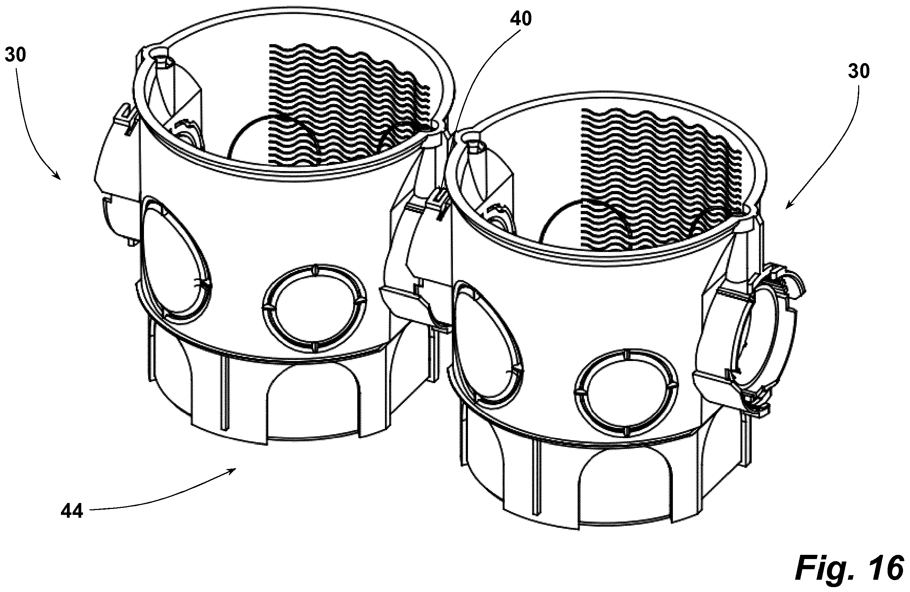

Figur 16 zeigt die Einbaueinheit 44 in einer perspektivischen Ansicht. Das Eingreifen des Führungsgliedes 40 des Verbindungsstutzens 31 der in der Figur 16 links gezeigten Installationsdose 30 in die Führungskulisse 39 des Verbindungsstutzen 31 der rechts gezeigten Installationsdose ist darin gut zu erkennen.

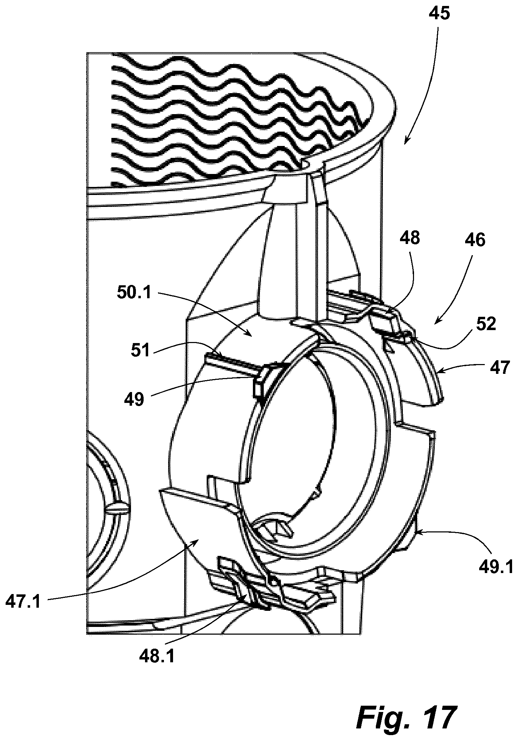

Figur 17 zeigt eine weitere Installationsdose 45 bzw. einen Ausschnitt derselben in einer perspektivischen Darstellung auf ihren Verbindungsstutzen 46. Die Installationsdose 45 ist ähnlich aufgebaut wie die Installationsdose 30 und somit zu einer Verbindung ihres Verbindungsstutzens 46 mit einem solchen einer zweiten Installationsdose 30 mittels einer Steck-Drehbewegung ausgelegt. Ebenso wie bei der Installationsdose 30 ist bei der Installationsdose 45 eine Trennung zwischen den zur Führung vorgesehenen Verbindungsmitteln und Rastmitteln vorgesehen. Die Installationsdose 45 verfügt in ihren äußeren Stutzenteilen 47, 47.1 über eine Führungskulisse 48, 48.1. In der Darstellung des Verbindungsstutzens 46 ist bezüglich der Führungskulisse 48 nur ihre stirnseitig offene Einstecköffnung erkennbar. Der sich an den Einsteckabschnitt anschließende, sich in Umfangsrichtung erstreckende Abschnitt ist anhand der Führungskulisse 48.1 besser erkennbar. Hierbei handelt es sich um eine langlochartige Durchbrechung des jeweiligen äußeren Stutzenteils 47, 47.1 mit der Einstecköffnung an ihrem einen Ende. Bei den Führungsgliedern 49, 49.1 handelt es sich um in einer Ansicht trapezförmige Stege, deren Umrissgeometrie ausgelegt ist, damit diese in die Einstecköffnung der Führungskulissen 48, 48.1 eingesetzt werden können. Die Materialstärke dieser Führungsglieder 49, 49.1 passt in die lichte Weite der Führungskulissen 48, 48.1 ein.

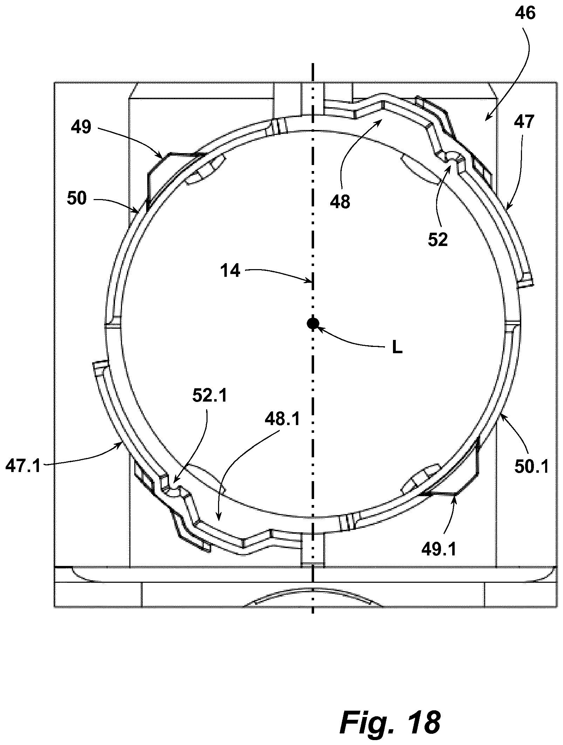

Bei der Installationsdose 45 tragen die inneren Stutzenteile 50, 50.1 Raststege 51, und zwar an derselben Position in Umfangsrichtung gesehen, an der auch die Führungsglieder 49, 49.1 angeordnet sind. Komplementär zu diesen außenseitig an den inneren Stutzenteilen 50, 50.1 angeformten Raststegen 51 ist in die innere Mantelfläche der äußeren Stutzenteile 47, 47.1 jeweils eine Rastnut 52, 52.1 eingebracht (s. insbesondere Figur 18).

Verriegelt werden zwei Installationsdosen 45 mittels ihrer Verbindungsstutzen 46 in gleicher Weise wie dieses vorstehend zu der Installationsdose 30 beschrieben worden ist.

Über die Auslegung bzw. Neigung der die Verriegelung zweier Verbindungsstutzen 9, 31 bzw. 46 miteinander bewirkenden Rastflächen kann die Rastverbindung bezüglich eines möglichen Lösens eingestellt werden. Ist ein Lösen gewünscht, bietet es sich an, die Verriegelungsflächen bzw. mindestens eine der selben etwas geneigt vorzusehen.

Die Erfindung ist anhand vom Ausführungsbeispiel beschrieben worden. Ohne den Umfang der geltenden Ansprüche zu verlassen, ergeben sich für einen Fachmann zahlreiche Möglichkeiten die Erfindung umzusetzen, ohne dass dieses im Rahmen dieser Ausführung näher beschrieben werden müsste.

**Bezugszeichenliste**

| | | | |
|---|---|---|---|
| 1 | Installationsdose | 30 | Installationsdose |
| 2 | Installationshohlraum | 31 | Verbindungsstutzen |
| 3 | Dosenkörper | 32 | Inneres Stutzenteil |
| 4 | Wand | 33,33.1 | Äußeres Stutzenteil |
| 5 | Montageflansch | 34,34.1 | Erstes inneres Stutzensegment |
| 6 | Boden | 35,35.1 | Zweites inneres Stutzensegment |
| 7 | Öffnung | 36,36.1 | Anschlag |
| 8,8.1 | Wandsegment | 37 | Öffnung |
| 9 | Verbindungsstutzen | 38 | Adapterstutzenring |
| 10 | Inneres Stutzenteil | 39 | Führungskulisse |
| 11 | Äußeres Stutzenteil | 40 | Führungsglied |
| 12 | Öffnung | 41,41.1 | Raststeg |
| 13 | Adapterstutzen | 42,42.1 | Rastnut |
| 14 | Ebene | 43 | Stützwand |
| 15 | Erstes inneres Stutzensegment | 44 | Einbaueinheit |
| 16 | Zweites inneres Stutzensegment | 45 | Installationsdose |
| 17,17.1 | Anschlag | 46 | Verbindungsstutzen |
| 18 | Kulisse | 47,47.1 | äußerer Stutzenteil |
| 19 | Verriegelungskante | 48,48.1 | Führungskulisse |
| 20 | Wand | 49,49.1 | Führungsglied |
| 21 | Bügel | 50,50.1 | inneres Stutzenteil |
| 22 | Rasthaken | 51 | Raststeg |
| 23 | Rasthaken | 52,52.1 | Rastnut |
| 24 | Führungswand | | |
| 25 | Raststeg | L | Längsachse |
| 26,26.1 | Wand | S | Stutzenkanal |
| 27 | Führungskulisse | | |
| 28 | Ausnehmung | | |
| 29 | Einbaueinheit | | |

## Patentansprüche

1. Installationsdose für elektrische/elektronische Installationen mit einem zur Aufnahme einer elektrischen und/oder elektronischen Komponente dienenden Dosenkörper (3) mit einer umlaufenden, den durch den Dosenkörper (3) bereitgestellten Installationshohlraum (2) einfassenden Wand (4) mit zumindest einer Öffnung (7, 12; 37) zum Ein- bzw. Herausführen zumindest einer Leitung in den Installationshohlraum und mit einem diese Öffnung (12, 37) und einen Stutzenkanal (S) einfassenden Verbindungsstutzen (9, 31, 46) zum Verbinden dieser Installationsdose (1, 30, 45) mit einer weiteren, einen komplementären Verbindungsstutzen tragenden Installationsdose, welche Installationsdose mit Verriegelungsmitteln zum mechanischen Verbinden dieser Installationsdose (1, 30, 45) mit einer weiteren, einen komplementäre Verriegelungsmittel aufweisenden Verbindungsstutzen tragenden Installationsdose (1, 30, 45) ausgestattet ist, wobei der Verbindungsstutzen (9, 31, 46) ein inneres Stutzenteil (10, 32, 50, 50.1) und zumindest ein äußeres Stutzenteil (11, 33, 33.1, 47, 47.1) umfasst, das mit seiner zum Stutzenkanal (S) weisenden Seite eine Führungskulisse für die Außenseite des inneren Stutzenteils (10, 32, 50, 50.1) des Verbindungsstutzens (9, 31, 46) einer zweiten Installationsdose (1, 30, 45) bereitgestellt, wobei das innere Stutzenteil (10, 32, 50, 50.1) und das zumindest eine äußere Stutzenteil (11, 33, 33.1, 47, 47.1) konzentrisch zueinander angeordnet sind, wobei das äußere Stutzenteil (11, 33, 33.1, 47, 47.1) mit seiner zu dem durch den Verbindungsstutzen (9, 31, 36) eingefassten Stutzenkanal (S) weisenden Seite eine Führungskulisse für die Außenseite des inneren Stutzenteils (10, 32, 50, 50.1) des Verbindungsstutzens (9, 31, 46) einer zweiten Installationsdose (1, 30, 45) bereitstellt, wenn diese beiden Installationsdosen (1, 30, 45) miteinander durch ihre Verbindungsstutzen (9, 31, 46) verbunden werden, **dadurch gekennzeichnet, dass** die Komplementarität zweier Verbindungsstutzen (9, 31, 46) dadurch bereitgestellt ist, dass der zumindest eine Verbindungsstutzen (9, 31, 46) selbst die komplementären Stutzenteile aufweist, welche komplementären Stutzenteile auf jeweils unterschiedlichen Seiten in Bezug auf eine vertikale, in der Längsachse (L) des Verbindungsstutzens (9, 31, 46) verlaufende Ebene (14) angeordnet sind, so dass zwei miteinander zu verbindende Installationsdosen (1, 30, 45) auf Grund der um eine vertikale Achse um 180 Grad gedrehten Verbindungsstutzen (9, 31, 46) die komplementären Stutzenteile der beiden Verbindungsstutzen (9, 31, 46) in einer komplementären Anordnung zueinander sind, so dass diese miteinander in Eingriff gestellt werden können.

2. Installationsdose nach Anspruch 1, **dadurch gekennzeichnet, dass** einer der beiden Stutzenteile (10, 32) zumindest ein erstes inneres Stutzensegment (15, 34, 34.1) umfasst, dessen Stirnfläche einen größeren Abstand von der umlaufenden Wand (4) des Dosenkörpers (3) aufweist als das zumindest eine zweite innere Stutzensegment (16, 35, 35.1) und beide Stutzensegmente (15, 34, 34.1, 16, 35, 35.1) durch in Umfangsrichtung des Verbindungsstutzens (9, 30) wirkende Anschläge (17, 17.1, 36, 36.1)für das Stutzenteil (10, 32) eines identischen Verbindungsstutzen einer zweiten Installationsdose getrennt sind.

3. Installationsdose nach Anspruch 1 oder 2, **dadurch gekennzeichnet, dass** das zumindest eine erste innere Stutzensegment (15, 34, 34.1) sich, in Umfangsrichtung des Verbindungsstutzens (9, 31) gesehen, an einer anderen Position befindet als das äußere Stutzenteil (11, 33, 33.1).

4. Installationsdose nach Anspruch 3, **dadurch gekennzeichnet, dass** der Stutzenkanal eine kreisförmige Querschnittsfläche aufweist und das erste innere Stutzensegment (15) sich über etwa 180 Grad in Umfangsrichtung erstreckt und das äußere Stutzenteil (11) unter Belassung eines Verbindungselementeingriffes ergänzend zu der Umfangswinkelerstreckung des ersten inneren Stutzensegmentes sich über den bis 180 Grad ergänzenden Umfangsabschnitt, sich etwa über 150 bis 165 Grad erstreckt.

5. Installationsdose nach einem der Ansprüche 1 bis 3, **dadurch gekennzeichnet, dass** die Verriegelungsmittel als Rastverriegelungsmittel ausgeführt sind.

6. Installationsdose nach Anspruch 4 oder 5, **dadurch gekennzeichnet, dass** das erste innere Stutzensegment (15) an seiner in Richtung zum Boden (6) des Dosenkörpers (3) weisenden Außenseite eine in diese Richtung weisende Verriegelungskante (19) trägt und in dem benachbarten Rastelementeingriff ein in die entgegengesetzte Richtung abragender Rasthaken (22) angeordnet sind, wobei die Verriegelungskante (19) und der Rasthaken (22) erste Rastmittel sind.

7. Installationsdose nach einem der Ansprüche 3 bis 5, **dadurch gekennzeichnet, dass** die Installationsdose (1), angeformt an der äußeren Mantelfläche ihres Dosenkörpers (3) eine in radialer Richtung zu dem Verbindungsstutzen (9) abragende und sich in vertikaler Richtung erstreckende Führungswand (24) sowie eine aus zwei parallel zueinander angeordneten Wänden (26, 26.1) bestehende Führungskulisse (27) zur Aufnahme der Führungswand eines Verbindungsstutzens einer zweiten Installationsdose angeordnet sind, wobei die Führungswand (24) und die Führungskulisse zweite Rastmittel aufweisen.

8. Installationsdose nach Anspruch 7, **dadurch gekennzeichnet, dass** die Führungswand (24) oberseitig einen Rasthaken (23) und die beiden Wände (26, 26.1) der Führungskulisse (27) im Bereich ihres oberen Abschlusses durch einen Raststeg (25) miteinander verbunden sind.

9. Installationsdose nach Anspruch 8, **dadurch gekennzeichnet, dass** der Raststeg (25) unterseitig durch eine in die die Führungskulisse (27) bildenden Wände eingebrachte, von ihrer von dem Dosenkörper (3) wegreichenden Stirnseite ausgehende Ausnehmung (28) begrenzt ist.

10. Installationsdose nach einem der Ansprüche 1 oder 2, **dadurch gekennzeichnet, dass** der Stutzenkanal eine kreisförmige Querschnittsgeometrie aufweist und dass zwei äußere, einander bezüglich des Stutzenkanals gegenüberliegende Stutzenteile (33, 33.1) vorgesehen sind, von denen jedes eine sich in Umfangsrichtung erstreckende, zur Stirnseite des Verbindungsstutzens (31) hin offene Führungskulisse (39) als erstes Verbindungsmittel aufweist, und dass zum Eingriff in eine solche Führungskulisse (39) als Teil eines komplementären Stutzenteils zum Zwecke einer Verbindung zweier Installationsdosen ein Führungsglied als zweites Verbindungsmittel eingreift.

11. Installationsdose nach Anspruch 10, **dadurch gekennzeichnet, dass** die inneren Stutzensegmente (34, 34.1, 35, 35.1) Teil eines inneren Stutzenringes sind.

12. Installationsdose nach Anspruch 10 oder 11, **dadurch gekennzeichnet, dass** das benachbart zu einem äußeren Stutzenteil (33, 33.1) befindliche erste innere Stutzensegment an seiner Außenseite einen Raststeg (41, 41.1) trägt und in die Innenseite der äußeren Stutzenteile (33, 33.1) eine Rastnut (42, 42.1) als Rastvertiefung mit einer zu der Geometrie des Raststeges (41, 41.1) komplementären Geometrie eingebracht ist.

13. Installationsdose nach Anspruch 12, **dadurch gekennzeichnet, dass** die Raststege und dementsprechend auch die Rastvertiefungen (42, 42.1) mit ihrer Langachse parallel zur Längserstreckung des Verbindungsstutzens (31) verlaufen.

14. Installationsdose nach einem der Ansprüche 10 bis 13, **dadurch gekennzeichnet, dass** die Installationsdose (30), angeformt an der äußeren Mantelfläche ihrer Dose eine in radialer Richtung zu dem Verbindungsstutzen abragende und sich in vertikaler Richtung erstreckende Stützwand (43) trägt.

15. Installationsdose nach einem der Ansprüche 1 bis 14, **dadurch gekennzeichnet, dass** die von dem Verbindungsstutzen (9, 31) eingefasste Öffnung des Dosenkörpers (3) eine Ausbrechöffnung ist.

16. Installationsdose nach Anspruch 15, **dadurch gekennzeichnet, dass** die Öffnung (12, 37) zumindest einen Adapterstutzen (13, 38) mit einem kleineren Durchmesser als der Durchmesser des Stutzenkanals aufweist, wobei innerhalb des Adapterstutzens (13, 38) eine innere Ausbrechöffnung geordnet ist.

17. Installationsdose nach einem der Ansprüche 1 bis 16, **dadurch gekennzeichnet, dass** die Installationsdose (1, 30) zwei, insbesondere einander bezüglich des Dosenkörpers (3) gegenüberliegende Verbindungsstutzen (9, 31) aufweist.

18. Anordnung umfassend zumindest zwei Installationsdosen nach einem der Ansprüche 1 bis 9 oder nach Anspruch 1 oder 2 in Verbindung mit einem der Ansprüche 10 bis 14, **dadurch gekennzeichnet, dass** die Verbindungsstutzen (9, 31) der beiden Installationsdosen (1, 30) miteinander in Eingriff gestellt und mit ihren komplementären Verbindungsmitteln miteinander verbunden sind und auf diese Weise eine Einbaueinheit (29, 44) mit zumindest zwei Installationsdosen (1, 30) gebildet ist.

## Claims

1. Installation socket for electrical/electronic installations, including a socket body (3) serving to accommodate a electrical and/or electronic component, with a circumferential wall (4), encompassing the installation cavity (2) provided by the socket body (3), with at least one opening (7, 12; 37) for the inlet and outlet of at least one lead into the installation cavity, and with a connection support piece (9, 31, 46) encompassing this opening (12, 37) and a connection support piece channel (S), for connecting this installation socket (1, 30, 45) to a further installation socket which carries complementary connection support pieces, said installation socket being equipped with interlocking means for the mechanical connecting of this installation socket (1, 30, 45) to a further installation socket (1, 30, 45), which carries a connection support piece comprising complementary interlocking means, wherein the connection support pieces (9, 31, 46) comprises an inner support piece (10, 32, 50, 50.1) and at least one outer support piece (11, 33, 33.1, 47, 47.1), which, with its side facing towards the support piece channel (S), provides a guide link for the outer side of the inner support part (10, 32, 50, 50.1) of the connection support piece (9, 31, 46) of a second installation socket (1, 30, 45), wherein the inner support piece (10, 32, 50, 50.1) and the at least one outer support piece (11, 33, 33.1, 47, 47.1) are arranged concentrically to one another, wherein the outer support piece (11, 33, 33.1, 47, 47.1) provides with its side facing towards the support piece channel (S), enclosed by the connection support piece (9, 31, 46), a guide link for the outer side of the inner support piece (10, 32, 50, 50.1) of the connection support piece (9, 31, 46) of a second installation socket (1, 30, 45), when these two installation sockets (1, 30, 45) are connected to one another by way of their connection support pieces (9, 31, 46), **characterised in that** the complementary arrangement of two connection support pieces (9, 31, 46) is provided **in that** the at least one connection support piece (9, 31, 46) itself comprises the complementary support parts, said complementary support parts being arranged in each case on different sides in relation to a vertical plane (14) running in the longitudinal axis (L) of the connection support piece (9, 31, 46), such that two installation sockets (1, 30, 45), which are to be connected to one another, can be brought into engagement with one another on the basis of the connection support pieces (9, 31, 46), rotated through 180 degrees about a vertical axis, bringing the complementary support pieces of the two connection support pieces (9, 31, 46) into a complementary arrangement to one another.

2. Installation socket according to claim 1, **characterised in that** one of the two support parts (10, 32) comprises at least one inner support segment (15, 34, 34.1), of which the face surface exhibits a greater distance interval from the circumferential wall (4) of the socket body (3) than the at least one second inner support segment (16, 35, 35.1), and both support segments (15, 34, 34.1, 16, 35, 35.1) are separated by stops (17, 17.1, 36, 36.1), taking effect in the circumferential direction of the connection support piece (9, 30), for the support piece (10, 32) of an identical connection support piece of a second installation socket.

3. Installation socket according to claim 1 or 2, **characterised in that** the at least one first inner support segment (15, 34, 34.1), seen in the circumferential direction of the connection support piece (9, 31), is located in a different position in respect of the outer support part (11, 33, 33.1).

4. Installation socket according to claim 3, **characterised in that** the support channel exhibits a circular cross-section surface, and the first inner support segment (15) extends over approximately 180 degrees in the circumferential direction, and the outer support part (11), on leaving a connection element engagement, as a supplement to the circumferential angle extension of the first inner support segment, extends over the circumferential section making up to 180 degrees, over approximately 150 to 165 degrees.

5. Installation socket according to any ones of claims 1 to 3, **characterised in that** the interlocking means are configured as latch interlocking means.

6. Installation socket according to claim 4 or 5, **characterised in that** the first inner support segment (15), on its outer side facing in the direction towards the base (6) of the socket body (3), carries an interlocking edge (19) facing in this direction, and that a latch hook (22), projecting in the opposite direction, is arranged in the adjacent latch element engagement point, wherein the interlocking edge (19) and the latch hook (22) are the first latching means.

7. Installation socket according to any one of claims 3 to 5, **characterised in that** the installation socket (1), shaped to the outer casing surface of its socket body (3), comprises a guide wall (24), projecting in the radial direction towards the connection support pieces (9) and also in the vertical direction, as well as a guide link (27), consisting of two walls (26, 26.1) arranged parallel to one another, for receiving the guide wall of a connection support piece of a second installation socket, wherein the guide wall (24) and the guide link comprise second latch means.

8. Installation socket according to claim 7, **characterised in that** the guide wall (24) comprises on its upper side a latch hook (23), and the two walls (26, 26.1) of the guide link (27) are connected to one another in the region of their upper ends by a latch web (25).

9. Installation socket according to claim 8, **characterised in that** the latch web (25) is delimited on its under side by a cut-out opening (28), introduced into the walls forming the guide link (27), extending from its face side extending away from the socket body (3).

10. Installation socket according to any one of claims 1 or 2, **characterised in that** the support channel exhibits a circular cross-section geometry, and that two outer support parts (33, 33.1) are provided, opposite one another in relation to the support channel, each of which comprises a guide link (39), extending in the circumferential direction and open towards the face side of the connection support piece (31), as a first connection means, and that, for the purpose of the engagement into such a guide link (39), as a part of a complementary support part, and for the purpose of a connection of two installation sockets, a guide member engages as second connection means.

11. Installation socket according to claim 10, **characterised in that** the inner support segments (34, 34.1, 35, 35.1) are part of an inner support ring.

12. Installation socket according to claim 10 or 11, **characterised in that** the first inner support segment, located adjacent to an outer support part (33, 33.1), carries on its outside a latch web (41, 41.1), and a latch slot (42, 42.1) is introduced into the inside of the outer support parts (33, 33.1), as a latch indentation with a geometry which is complementary to the geometry of the latch web (41, 41.1).

13. Installation socket according to claim 12, **characterised in that** the latch webs, and, correspondingly, also the latch indentations (42, 42.1), run with their longitudinal axis parallel to the longitudinal extension of the connection support part (31).

14. Installation socket according to any one of claims 10 to 13, **characterised in that** the installation socket (30) carries, shaped to the outer casing surface of its socket, a support wall (43), projecting in the radial direction to the connection support parts and extending in the vertical direction.

15. Installation socket according to any one of claims 1 to 14, **characterised in that** the opening of the socket body (3), encompassed by the connection support pieces (9, 31), is a break-out opening

16. Installation socket according to claim 15, **characterised in that** the opening (12, 37) exhibits at least one adapter support piece (13, 38), with a smaller diameter than the diameter of the support channel, wherein an inner break-out opening is arranged inside the adapter support piece (13, 38).

17. Installation socket according to any one of claims 1 to 16, **characterised in that** the installation socket (1, 30) comprises two connection support pieces (9, 31), in particular located opposite one another in relation to the socket body (3).

18. Assembly comprising at least two installation sockets according to any ones of claims 1 to 9, or according to claim 1 or 2 in connection with any one of claims 10 to 14, **characterised in that** the connection support pieces (9, 31) of the two installation sockets (1, 30) are in engagement with one another, and are connected to one another by way of their complementary connection means, and in this way an installation unit (29, 44) is formed with at least two installation sockets (1, 30).

## Revendications

1. Boîte d'installation pour des installations électriques/électroniques comportant un corps de boîte (3) servant à accueillir un composant électrique et/ou électronique avec une paroi (4) périphérique englobant une cavité d'installation (2) mise à disposition par le corps de boîte (3), avec au moins une ouverture (7, 12; 37) destinée à introduire ou faire sortir au moins un câblage dans la cavité d'installation et avec une tubulure de raccordement (9, 31, 46) enserrant cette ouverture (12, 37) et un canal de tubulure (S) destiné à raccorder cette boîte d'installation (1, 30, 45) avec une boîte d'installation supplémentaire supportant une tubulure de raccordement complémentaire, laquelle boîte d'installation est munie de moyens de verrouillage afin de relier mécaniquement cette boîte d'installation (1, 30, 45) avec une boîte d'installation (1, 30, 45) supplémentaire supportant une tubulure de raccordement présentant des moyens de verrouillage complémentaires, la tubulure de raccordement (9, 31, 46) englobant une partie de tubulure (10, 32, 50, 50.1 ) intérieure et au moins une partie de tubulure (11, 33, 33.1, 47, 47.1) extérieure, qui met à disposition, avec son côté orienté vers le canal de tubulure (S), un coulisseau de guidage pour la face extérieure de la partie de tubulure (10, 32, 50, 50.1) intérieure de la tubulure de raccordement (9, 31, 46) d'une seconde boîte d'installation (1, 30, 45), la partie de tubulure (10, 32, 50, 50.1 ) intérieure et l'au moins une partie de tubulure (11, 33, 33.1, 47, 47.1 ) extérieure étant disposées de façon concentrique l'une par rapport à l'autre, la partie de tubulure extérieure (11, 33, 33.1, 47, 47.1 ) mettant à disposition, avec son côté orienté vers le canal de tubulure (S) englobé par la tubulure de raccordement (9, 31, 36), un coulisseau de guidage pour la face extérieure de la partie de tubulure (10, 32, 50, 50.1) intérieure de la tubulure de raccordement (9, 31, 46) d'une seconde boîte d'installation (1, 30, 45), lorsque ces deux boîtes d'installation (1, 30, 45) sont reliées par leurs tubulures de raccordement (9, 31, 46), **caractérisée en ce que** la complémentarité de deux tubulures de raccordement (9, 31, 46) est mise à disposition par le fait que l'au moins une tubulure de raccordement (9, 31, 46) présente elle-même les parties de tubulaire complémentaires, lesquelles parties de tubulure complémentaires sont respectivement disposées sur des faces différentes par rapport à un plan (14) vertical qui suit l'axe longitudinal (L) de la tubulure de raccordement (9, 31, 46), de sorte que deux boîtes d'installation (1, 30, 45) à relier l'une à l'autre, les parties de tubulure complémentaires des deux tubulures de raccordement (9, 31, 46), sont dans une disposition complémentaire l'une par rapport à l'autre, en raison de la rotation de 180 degrés autour d'un axe vertical des tubulures de raccordement (9, 31, 46) et peuvent de ce fait être positionnées pour s'engager l'une dans l'autre.

2. Boîte d'installation selon la revendication 1, **caractérisée en ce que** l'une des deux parties de tubulure (10, 32) comporte au moins un premier segment de tubulure (15, 34, 34.1) intérieur, dont la face frontale présente un intervalle plus grand par rapport à la paroi (4) périphérique du corps de boîte (3) que l'au moins un second segment de tubulure (16, 35, 35.1) intérieur supplémentaire et que les deux segments de tubulure ( 15, 34, 34.1, 16, 35, 35.1) sont séparés par des butées (17, 17.1, 36, 36.1) agissant dans le sens périphérique de la tubulure de raccordement (9, 30) prévues pour la partie de tubulure (10, 32) d'une tubulure de raccordement identique d'une seconde boîte d'installation.

3. Boîte d'installation selon la revendication 1 ou 2, **caractérisée en ce que** l'au moins un premier segment de tubulure (15, 34, 34.1) intérieur, se trouve, considéré dans le sens périphérique de la tubulure de raccordement (9, 31), dans une autre position que la partie de tubulure (11, 33, 33.1) extérieure.

4. Boîte d'installation selon la revendication 3, **caractérisée en ce que** le canal de tubulure présente une section transversale de forme circulaire et que le premier segment de tubulure (15) intérieur s'étend sur environ 180 degrés dans le sens périphérique et que la partie de tubulure (11) extérieure, tout en laissant un engagement des éléments de raccordement complétant l'étendue de l'angle inscrit du premier segment de tubulure intérieur, s'étend sur le tronçon périphérique complémentaire jusqu'à 180 degrés et approximativement sur 150 à 165 degrés.

5. Boîte d'installation selon l'une des revendications 1 à 3, **caractérisée en ce que** les moyens de verrouillage sont conformés en tant que moyens de verrouillage à enclenchement.

6. Boîte d'installation selon la revendication 4 ou 5, **caractérisée en ce que** le premier segment de tubulure (15) intérieur supporte, sur sa face extérieure orientée vers le fond (6) du corps de boîte (3), une arrête de verrouillage (19) orientée dans cette direction et qu'au niveau de l'élément d'engagement à enclenchement voisin, est disposé un crochet d'enclenchement (22) en saillie dans la direction opposée, l'arrête de verrouillage (19) et le crochet d'engagement (22) étant des premiers moyens d'enclenchement.

7. Boîte d'installation selon l'une des revendications 3 à 5, **caractérisée en ce que** sont disposés sur la boîte d'installation (1), moulés sur la surface d'enveloppe extérieure de son corps de boite (3), une paroi de guidage (24) s'étendant dans le sens vertical, en saillie dans le sens radial par rapport à la tubulure de raccordement (9) ainsi qu'un coulisseau de guidage (27) constitué de deux parois (26, 26.1) disposées parallèlement l'une par rapport à l'autre, destiné à accueillir la paroi de guidage d'une tubulure de raccordement d'une seconde boîte d'installation, la paroi de guidage (24) et le coulisseau de guidage présentant les seconds moyens d'enclenchement.

8. Boîte d'installation selon la revendication 7, **caractérisée en ce que** la paroi de guidage (24) présente sur la face supérieure un crochet d'enclenchement (23) et les deux parois (26, 26.1) du coulisseau de guidage (27) sont reliées l'une à l'autre au niveau de leur terminaison supérieure par une butée d'enclenchement (25).

9. Boîte d'installation selon la revendication 8, **caractérisée en ce que** la butée d'enclenchement (25) est limitée sur la face inférieure par un évidement (28) réalisé dans les parois formant le coulisseau de guidage (27), en partant de sa face frontale, dans le sens opposé au corps de boîte (3).

10. Boîte d'installation selon l'une des revendications 1 ou 2, **caractérisée en ce que** le canal de tubulure présente une géométrie transversale de forme circulaire et que deux parties de tubulure (33, 33.1 ) extérieures, situées à l'opposé l'une de l'autre par rapport au canal de tubulure, sont prévues, dont chacune présente un coulisseau de guidage (39), s'étendant dans le sens périphérique, ouvert vers la face frontale de la tubulure de raccordement (31), faisant office de premier moyen de raccordement et que, pour s'engager dans un tel coulisseau de guidage (39) en tant que partie d'une partie de tubulure complémentaire, afin de raccorder deux boîtes d'installation, un élément de guidage s'engage faisant office de second moyen de raccordement.

11. Boîte d'installation selon la revendication 10, **caractérisée en ce que** les segments de tubulure (34, 34.1, 35, 35.1) intérieurs font partie d'une bague de tubulure intérieure.

12. Boîte d'installation selon la revendication 10 ou 11, **caractérisée en ce que** le premier segment de tubulure intérieur, qui se trouve à côté d'une partie de tubulure (33, 33.1) extérieure, supporte, sur sa face extérieure, une butée d'enclenchement (41, 41.1) et qu'une rainure d'engagement (42, 42.1) est aménagée dans la face intérieure de la partie de tubulure (33, 33.1) extérieure, faisant office de gorge d'enclenchement avec une géométrie complémentaire à la géométrie de la butée d'enclenchement (41, 41.1).

13. Boîte d'installation selon la revendication 12, **caractérisée en ce que** les butées d'enclenchement et par conséquent les gorges d'enclenchement (42, 42.1) s'étendent, par leur axe longitudinal, parallèlement à l'étendue longitudinale de la tubulure de raccordement (31).

14. Boîte d'installation selon l'une des revendications 10 à 13, **caractérisée en ce que** la boîte d'installation (30) supporte, moulée sur la surface d'enveloppe extérieure de sa boîte, une paroi d'appui (43) en saillie dans le sens radial vers la tubulure de raccordement et s'étendant dans le sens vertical.

15. Boîte d'installation selon l'une des revendications 1 à 14, **caractérisée en ce que** l'ouverture du corps de boîte (3) englobée par la tubulure de raccordement (9, 31) est une ouverture à casser.

16. Boîte d'installation selon la revendication 15, **caractérisée en ce que** l'ouverture (12, 37) présente au moins une tubulure d'adaptation (13, 38) avec un diamètre inférieur au diamètre du canal de tubulure, une ouverture intérieure à casser étant disposée à l'intérieur de la tubulure d'adaptation (13, 38).

17. Boîte d'installation selon l'une des revendications 1 à 16, **caractérisée en ce que** la boîte d'installation (1, 30) présente deux tubulures de raccordement (9, 31) notamment situées à l'opposé l'une de l'autre par rapport au corps de boîte (3).

18. Agencement comprenant au mois deux boîtes d'installation selon l'une des revendications 1 à 9 ou selon la revendication 1 ou 2 en association avec l'une des revendications 10 à 14, **caractérisé en ce que** les tubulures de raccordement (9, 31) des deux boîtes d'installation (1, 30) sont placées en engagement l'une avec l'autre et raccordées l'une à l'autre grâce à leurs moyens de raccordement complémentaires et forment ainsi une unité structurelle (29, 44) comportant au moins deux boîtes d'installation (1, 30).
